# EUROPÄISCHE PATENTSCHRIFT

(11) **EP 3 583 271 B1**
(45) Veröffentlichungstag und Bekanntmachung des Hinweises auf die Patenterteilung: **05.10.2022**
(21) Anmeldenummer: 18717549.2
(22) Anmeldetag: 05.04.2018
(51) Int. Cl.: E02F 3/88, B60P 1/16, E02F 7/06, E01H 1/08

(54) **SAUGBAGGER MIT SCHWENKBARER FILTEREINHEIT**
SUCTION DREDGER HAVING A SWIVELING FILTER UNIT
CAMION ASPIRATEUR PRÉSENTANT UNE UNITÉ FILTRANTE POUVANT PIVOTER

(30) Priorität: 24.04.2017 DE 102017108731
(43) Veröffentlichungstag der Anmeldung: 25.12.2019
(73) Patentinhaber: RSP GMBH, 07318 Saalfeld (DE)
(72) Erfinder: RENGER, Karl-Heinz, 07422 Saalfelder Höhe (DE); RENGER, Marina, 07422 Saalfelder Höhe (DE); GRABER, Jens, 07422 Saalfelder Höhe (DE)
(74) Vertreter: Engel, Christoph Klaus
(86) Internationale Anmeldenummer: PCT/EP2018/058755
(87) Internationale Veröffentlichungsnummer: WO 2018/197178

(56) Entgegenhaltungen:
- EP-A1- 2 896 748
- DE-A1-102012 009 576
- DE-U1- 9 016 448
- DE-U1-202010 007 463
- DE-U1-202016 005 074
- JP-A- 2004 270 160

## Beschreibung

Die vorliegende Erfindung betrifft einen Saugbagger mit einer Filtereinheit. Solche Saugbagger besitzen ein Fahrzeuggestell, ein Sauggebläse, welches einen Saugstrom erzeugt, einen auskippbaren Materialsammelbehälter, der eine Sammelkammer aufweist und um eine parallel zur Fahrzeuglängsachse verlaufende Kippachse schwenkbar ist zwischen einer Arbeitsposition und einer Entleerungsposition, in welcher sich eine Sammelkammeröffnung in einer unteren Position befindet, um das in der Sammelkammer enthaltene Material schwerkraftbedingt austreten zu lassen. Die Filtereinheit ist in einer Filterkammer im Materialsammelbehälter in Saugstromrichtung hinter der Sammelkammer angeordnet und enthält zumeist mehrere Filterelemente, die vom Saugstrom durchströmt werden. Ein Sauganschluss mündet beispielsweise an der hinteren Stirnwand des Materialsammelbehälters in die Sammelkammer. Die eine Saugstromführung führt vom Sauganschluss durch die Sammelkammer und die Filtereinheit zum Sauggebläse und von dort zu einem Auslass.

Bei einem Saugbagger handelt es sich um ein Fahrzeug mit einem Fahrzeuggestell mit einer Fahrzeuglängsachse, die in einer Fahrzeugmittenebene verläuft. Üblicherweise kommt ein auskippbarer Materialsammelbehälter zum Einsatz, der an einer parallel zur Fahrzeuglängsachse verlaufenden Kippachse aufgehängt ist. Im Zusammenhang mit Nutz- und Lastfahrzeugen ist es bekannt, dass auf einem sogenannten Fahrzeugchassis für den jeweiligen Einsatzzweck erforderliche Aufbauten angeordnet werden, die mehr oder weniger an den mobilen Einsatzfall angepasst sind. Solche Aufbauten werden mit dem Fahrzeuggestell verbunden, wobei in bestimmten Einsatzfällen der Fahrzeughauptantrieb auch als Antriebsaggregat für Zusatzfunktionen genutzt wird.

Aus der DE 38 37 670 A1 ist ein Saugbagger bekannt, umfassend einen pneumatischen Saugrüssel, einen Sammelbehälter für das aufgesaugte Erdreich, in den der Saugrüssel mündet und in dem das Erdreich aus dem Saugluftstrom abgeschieden wird, sowie ein an den Sammelbehälter angeschlossenes Sauggebläse zur Erzeugung des Saugluftstroms. Zu den weiteren üblichen Bestandteilen der Saugbagger gehören Führungselemente für den Saugrüssel und Filter zum Reinigen der Saugluft, bevor diese den Sammelbehälter wieder verlässt und an die Umgebung abgegeben wird.

Die DE 10 2011 119 924 A1 zeigt einen Saugbagger zum Aufnehmen von Sauggut, wie Erdreich oder Schlämme, mit einer pneumatischen Saugturbine zur Erzeugung eines Saugluftstromes, die an einem Sammelbehälter angeschlossen ist, in welchen ein Saugschlauch mündet. Der Saugschlauch ist an einem Führungsarm angeordnet, welcher an einer vertikalen Drehachse befestigt ist, um den Arbeitsbereich des Saugbaggers zu erweitern. An dem Materialsammelbehälter sind zwei Saugschlauchanschlüsse vorgesehen, die jeweils am äußeren Seitenbereich einer hinteren Stirnwand in den Sammelbehälter münden.

Die DE 198 51 111 C1 beschreibt einen Saugbagger mit einer im Materialsammelbehälter in Fahrtrichtung vorn angeordneten Sammelkammer und in Fahrtrichtung hinten liegendem Filter. Der Anschluss des Saugrohrs an dem Materialsammelbehälter erfolgt an einer Seite des Hecks des Sammelbehälters.

Auch in der EP 1 151 165 B1 ist ein Saugbagger beschrieben. Dieser arbeitet nach dem Dünnstrom-Förderprinzip und ist hauptsächlich zum Aufnehmen von Bodenaushub konfiguriert. Die Filtereinheit liegt in Fahrtrichtung vor dem Sammelraum und wird von dem Saugstrom durchströmt, nachdem die groben Materialbestandteile im Sammelraum abgeschieden wurden. Oberhalb der Filtereinheit sind Druckluftrohre vorgesehen, die Druckluft durch den Filter blasen können, um diesen zu reinigen. Dennoch kommt es nach und nach zu einer so starken Verschmutzung der Filtereinheit, sodass diese ausgebaut und gereinigt werden muss, um die gewünschte Saugleistung aufrecht zu erhalten. Der Aufwand dieser Filterreinigung ist hoch, denn bereits für den Ausbau des relativ schweren Filters wird ein Kran oder eine vergleichbare Hubeinheit benötigt.

In der DE 10 2012 003 226 A1 ist ein Saugbagger mit einer hydraulischen Hubvorrichtung beschrieben. Durch Ausfahren der Hubvorrichtung wird ein Deckel eines Materialsammelbehälters um eine Deckeldrehachse geschwenkt, so dass der Materialsammelbehälter nach oben zur Seite geöffnet wird.

Die DE 20 2016 005 074 U1 beschreibt eine Filteranordnung eines Saugbaggers mit mehreren Filterpatronen, welche zumindest an einer Stirnseite mit einem Flansch zur Montage in der Filteranordnung versehen sind. Die Filteranordnung ist schwenkbar in der Saugeinheit des Saugbaggers montiert, so dass diese zum Wechseln der Filterpatronen geschwenkt werden kann.

Die DE 90 16 448 U1 zeigt einen Saugbagger mit einer Filterwandung. Die Filterwandung ist in mehrere dicht aneinander anschließende Filterlamellen gegliedert, welche vorzugsweise mittels einer Antriebsvorrichtung aus der Filterebene zur Reinigung in eine Schräglage verschwenkt werden können. Auf diese Weise kann auf der Oberseite der Filterwandung abgelagerter Staub in den Sauggut-Aufnahmeraum gebracht werden. Im Deckel des Aufnahmebehälters können Klopfwerkzeuge angeordnet sein, welche auf die Filterwandung einwirken. Alternativ kann eine Presslufteinrichtung zur Filterreinigung zum Einsatz kommen.

Die DE 20 2010 007 463 U1 beschreibt einen Saugbagger zum Aufnehmen von Sauggut. Der Saugbagger umfasst ein Sauggebläse, welches einen Saugstrom erzeugt, einen auskippbaren Sammelbehälter, eine Filtereinheit, welche zur Kippachse des Sammelbehälters verlaufenden Drehachse drehbeweglich gelagert ist und vom Saugstrom durchströmt wird, und ein Verriegelungselement, welches im entriegelten Zustand ein Schwenken der Filtereinheit um die Drehachse ermöglicht. Der Schwerpunkt der Filtereinheit ist derart angeordnet, dass beim Übergang von der Arbeits- in die Entleerungsposition und bei entriegeltem Verriegelungselement die Filtereinheit schwerkraftbedingt selbsttätig abschnittsweise aus einer Filterkammer herausschwenkt.

Die Aufgabe der vorliegenden Erfindung besteht darin, einen verbesserten Saugbagger bereitzustellen, der eine schnellere und einfachere Kontrolle und Reinigung seiner Filtereinheit gestattet.

Diese Aufgabe wird durch einen Saugbagger gemäß dem beigefügten Anspruch 1 gelöst.

Der erfindungsgemäße Saugbagger besitzt zunächst in herkömmlicher Weise ein Fahrzeuggestell, welches neben den üblichen Fahrzeugbestandteilen auch die Spezialaufbauten, die den Saugbaggerbetrieb ermöglichen, trägt. Dazu gehören ein Sauggebläse, welches einen Saugstrom erzeugt, sowie ein auskipp barer Materialsammelbehälter, der eine Sammelkammer aufweist und um eine parallel zur Fahrzeuglängsachse verlaufende Kippachse schwenkbar ist, zwischen einer Arbeitsposition und einer Entleerungsposition. Die Arbeitsposition wird für den Saugbaggerbetrieb oder die Fahrt eingenommen. In der Entleerungsposition wurde der Materialsammelbehälter um die Kippachse geschwenkt, sodass sich eine Sammelkammeröffnung in einer unteren Position befindet, um das in die Sammelkammer aufgenommene Material schwerkraftbedingt auszukippen. Der Materialsammelbehälter umfasst weiterhin in einer Filterkammer eine Filtereinheit, welche im Materialsammelbehälter in Saugstromrichtung hinter der Sammelkammer angeordnet ist und mindestens ein Filterelement enthält, das vom Saugstrom durchströmt wird. Je nach Art der Führung des Saugluftstroms kann die Filterkammer dabei bezogen auf die Fahrtrichtung des Saugbaggers vor oder hinter dem Materialsammelbehälter angeordnet sein.

Die Filtereinheit ist an einer parallel zur Kippachse des Materialsammelbehälters verlaufenden Drehachse drehbeweglich gelagert. Die Drehachse ist radial beabstandet von der Kippachse angeordnet, bevorzugt diametral gegenüberliegend zur Kippachse. Die Drehachse ist am Materialsammelbehälter gelagert. Die Filtereinheit ist anders als in vorbekannten Anwendungen somit nicht am Deckel des Sammelbehälters befestigt. Dies gestattet es, die gesamte Filtereinheit über die Drehachse aus der Fahrzeugflucht heraus zu schwenken, sodass die ausgeschwenkte Filtereinheit einfach zugänglich wird.

Außerdem ist mindestens ein Verriegelungselement vorgesehen, welches im verriegelten Zustand die Lage der Filtereinheit in der Filterkammer fixiert und die Drehung der Filtereinheit um die Drehachse blockiert, sodass auch beim das Auskippen (Entleeren) des Materialsammelbehälters die Filtereinheit in der Filterkammer verbleibt. Wenn das Verriegelungselement entriegelt wird, ist die Filtereinheit nicht mehr in der Filterkammer fixiert, sondern um die Drehachse schwenkbar, sodass es aus der Filterkammer herausgeschwenkt werden kann. Vorzugsweise sind geeignete Dichtelemente angeordnet, durch welche sichergestellt ist, dass der Saugluftstrom durch die Filtereinheit geführt wird und keine Nebenluft ein- oder austritt. Besonders bevorzugt stellen das Verriegelungselement dazu auch sicher, dass die Filtereinheit im verriegelten Zustand entsprechend abgedichtet in der Filterkammer angeordnet ist.

Der Schwerpunkt der Filtereinheit in Bezug zur Drehachse ist dabei so angeordnet, dass die Filtereinheit beim Übergang von der Arbeitsposition in die Entleerungsposition, d. h. beim Auskippen des Materialsammelbehälters und bei gleichzeitig entriegeltem Verriegelungselement schwerkraftbedingt zumindest abschnittsweise aus der Filterkammer herausschwenkt.

Bei einer abgewandelten Ausführungsform ist ein Schwenkantrieb vorgesehen, der bei Aktivierung zusätzlich auf die Filtereinheit einwirkt, um das Ausschwenken aus der Filterkammer zu unterstützen. Ebenso sind Ausführungsformen möglich, bei denen die Filtereinheit bei entriegeltem Verriegelungselement in der Entleerungsposition zunächst schwerkraftgetrieben ein erstes Stück aus der Filterkammer heraus schwenkt und für das weitergehende Herausschwenken dann ein Schwenkantrieb zum Einsatz kommt.

Das Verriegelungselement ist im einfachsten Fall durch eine oder mehrere Schrauben oder dergleichen gebildet, die manuell gelöst werden müssen. In weitergebildeten Ausführungsformen kommen automatische Verriegelungselemente zum Einsatz, die z.B. elektrisch oder hydraulisch betätigt werden können. Die Verriegelungselemente sichern die Filtereinheit auch gegen eine Verlagerung aufgrund des im Betrieb in der Filterkammer herrschenden Unterdrucks.

Die erfindungsgemäß abgewandelte Lagerung der Filtereinheit kann ohne weitere Änderungen am Saugprinzip in bisher gefertigte Saugbagger eingefügt werden. Da die Filtereinheit beim Auskippen des Materialsammelbehälters und entriegeltem Verriegelungselement aus der Filterkammer herausschwenken, kann der Zustand der einzelnen Filterelemente begutachtet werden und bei Bedarf eine Reinigung, beispielsweise mit einem Hochdruckreiniger erfolgen oder auch der Austausch von Filterelementen vorgenommen werden. Die regelmäßige Filterreinigung verbessert auch die Leistung des Saugbaggers. Die Lebensdauer der Filtereinheit wird durch Vermeidung bzw. schneller Entfernung von starker Verschmutzung verlängert.

Gemäß einer bevorzugten Ausführungsform ist die Filtereinheit lösbar an der Drehachse angebracht oder alternativ ist die Drehachse lösbar am Materialsammelbehälter angebracht, sodass sich nach dem Lösen der entsprechenden Verbindung die gesamte Filtereinheit aus der Filterkammer entnehmen lässt. Müssen ein oder mehrere Filterelemente ausgetauscht werden, kann entweder nach Entfernen von beispielsweise vier Sicherungsbolzen an der Drehachse die gesamte Filtereinheit oder das zu ersetzende Filterelement einzeln aus der Filterkammer entnommen werden.

Eine bevorzugte Ausführungsform zeichnet sich dadurch aus, dass die Drehachse auf der in Bezug auf eine Fahrzeugmittelebene der Kippachse diametral gegenüberliegenden Seite angeordnet ist. Die Drehachse ist bevorzugt an der oberen Kante des Materialsammelbehälters gelagert. Es ist vorteilhaft, wenn der Materialsammelbehälter um mehr als 90° um die Kippachse verschwenkbar ist, um von der Arbeitsposition in die Entleerungsposition zu gelangen. Beim Übergang von der Arbeitsposition in die Entleerungsposition wird die Drehachse der Filtereinheit mit dem Materialsammelbehälter um die Kippachse geschwenkt, durchläuft dabei eine Ebene, die senkrecht steht und die Kippachse einschließt, und nimmt in der Entleerungsposition des Sammelbehälters eine Position ein, die außerhalb der Projektionsebene des Fahrgestells des Saugbaggers liegt, also auf derselben Seite wie die Kippachse in Bezug zur Fahrzeugmittenebene, aber weiter entfernt von dieser ist.

Gemäß einer Ausführungsform besitzt die Filtereinheit eine Grund- oder Halteplatte, an welcher die mehreren Filterelemente befestigt sind. Vorzugsweise ist die Halteplatte an einer ihrer Seitenkanten an der Drehachse gelagert, sodass sie mit der Filtereinheit um die Drehachse verschwenkt werden kann, wenn die Verriegelungselemente im entriegelten Zustand sind.

Gemäß einer zweckmäßigen Ausführungsform besitzt der Saugbagger einen Deckel, welcher einteilig oder mehrteilig gestaltet sein kann und den Materialsammelbehälter in der Arbeitsposition an seiner Oberseite verschließt. Zum Öffnen des Deckels ist dieser bevorzugt schwenkbar an einer Klappachse gelagert, um beim Übergang in die Entleerungsposition die Oberseite des Materialsammelbehälters freizugeben, sodass das in der Sammelkammer enthaltene Material ausgeschüttet werden kann. Vorzugsweise sind im Deckel Luftkanalabschnitte zur Führung des Saugstroms von der Filtereinheit zum Sauggebläse angeordnet.

Eine abgewandelte Ausführungsform des Materialsammelbehälters besitzt einen Deckel, der mindestens zweigeteilt ist. Jedes Deckelteil ist dabei an einer in der Symmetrieebene des Materialsammelbehälters liegenden Klappachse drehbeweglich befestigt, sodass jeweils etwa die Hälfte der Oberseite des Materialsammelbehälters geöffnet werden kann, wenn dieser zum Entleeren verkippt wird. Es ist vorteilhaft, wenn Öffnungs-, Verschluss- und Verriegelungselemente vorgesehen sind, um den Deckel zu öffnen bzw. während des Saugbetriebs dicht zu verschließen, sodass die Druckverhältnisse im Materialsammelbehälter den Anforderungen eines Saugbaggers genügen.

Eine bevorzugte Ausführungsform verwendet ein Filterelement, welches durch mehrere zylindrische Filterpatronen aus Filtermaterial gebildet ist. Vorzugsweise sind die Filterpatronen mithilfe von Schnellspannverschlüssen lösbar in der Halteplatte befestigt. Um eine Ausschwenken der Filtereinheit aus der Filterkammer zu ermöglichen, verbleibt zwischen den Filterpatronen, welche von der Drehachse am weitesten entfernt positioniert sind, und der Wandung der Filterkammer, welche von der Drehachse am weitesten entfernt liegt, ein Freiraum.

Je nach Ausführungsform des Materialsammelbehälters kann die Sammelkammer vor oder hinter der Filtereinheit liegen, bezogen auf die Fahrtrichtung des Saugbaggers.

Gemäß einer abgewandelten Ausführungsform ist ein Auskippen des Materialsammelbehälters auf beiden Fahrzeugseiten ermöglicht. Gleichzeitig ist es zweckmäßig, wenn eine erhöhte Position der Kippachse vorgesehen ist, um ein Entleeren des Materialsammelbehälters auf unterschiedlich hohe Flächen, beispielsweise ein nebenstehendes Fahrzeug zu gestatten.

Der Saugbagger besitzt gemäß einer bevorzugten Ausführungsform mindestens einen Kippantrieb, der auf den Materialsammelbehälter einwirkt, um diesen für einen Entleerungsvorgang um die Kippachse zu schwenken.

Weitere Einzelheiten, Vorteile und Weiterbildungen der vorliegenden Erfindung ergeben sich aus der nachfolgenden Beschreibung einer bevorzugen Ausführungsform unter Bezugnahme auf die Zeichnung. Es zeigen:
- Fig. 1: eine vereinfachte perspektivische Ansicht eines erfindungsgemäßen Saugbaggers mit einem Materialsammelbehälter in Entleerungsposition und mit ausgeschwenkter Filtereinheit;
- Fig. 2: den Materialsammelbehälter in einer perspektivischen Ansicht in Arbeitsposition.

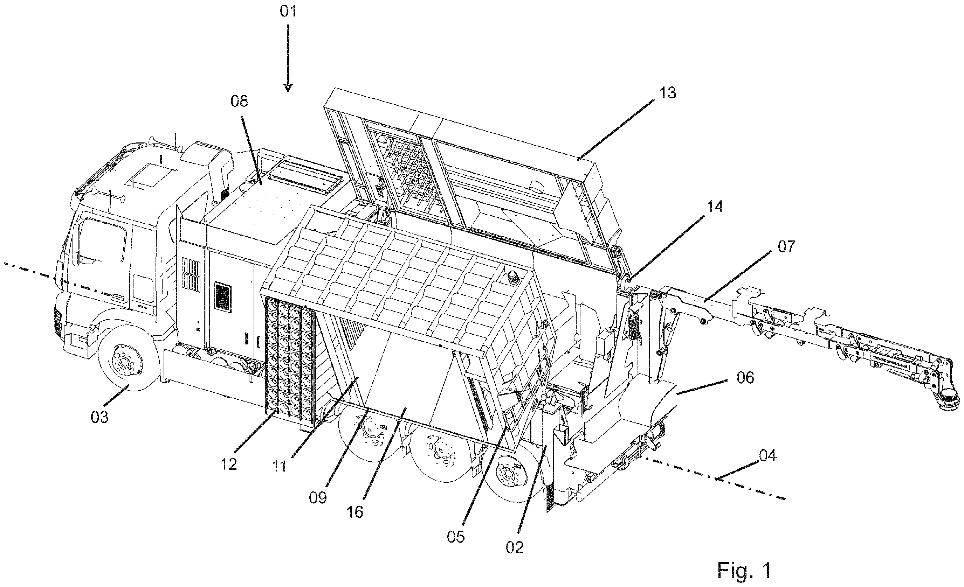

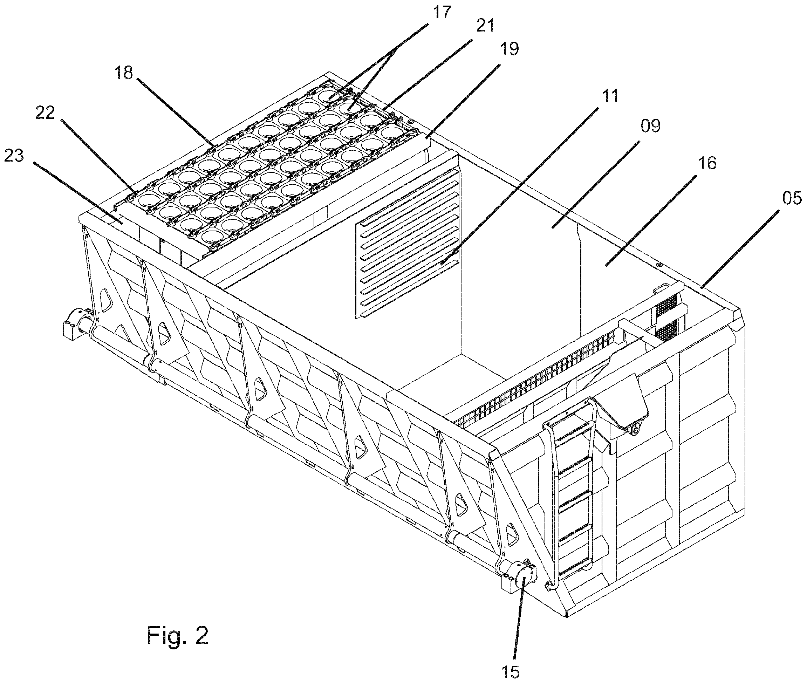

Fig. 1 zeigt in einer vereinfachten perspektivischen Ansicht einen Saugbagger 01, der zunächst in herkömmlicher Weise ein Fahrzeuggestell 02 sowie mehrere Fahrzeugräder 03 umfasst. Zur Orientierung ist eine Fahrzeuglängsachse 04 eingezeichnet. Weiterhin umfasst der Saugbagger 01 einen Materialsammelbehälter 05, der auf dem Fahrzeuggestell 02 montiert ist und in Fig. 1 in eine Entleerungsposition geschwenkt dargestellt ist. Stattdessen zeigt Fig. 2 als Detail den Materialsammelbehälter 05 in einer Arbeitsposition.

An der hinteren Seite des Fahrzeugs ist ein Sauganschluss 06 vorgesehen, an welchem ein Saugschlauch 07 angeschlossen ist. Am freien Ende des Saugschlauchs 07 wird Material eingesaugt, mithilfe eines Saugstroms, der durch ein Sauggebläse 08 erzeugt wird.

Bei der in Fig. 1 dargestellten Ausführungsform verläuft der Saugstrom zunächst in eine Sammelkammer 09 gelenkt. Der Saugstrom verläuft dann durch eine Trennwand 11 in eine Filtereinheit 12, in welcher kleinere Partikel, die sich noch im Saugstrom befinden, herausgefiltert werden. Bei der dargestellten Ausführungsform befindet sich die Sammelkammer 09 in Fahrtrichtung hinter der Filtereinheit 12.

Der Materialsammelbehälter 05 ist an seiner Oberseite durch einen Deckel 13 verschlossen, der in Fig. 1 in der geöffneten Position gezeigt ist. Dazu ist er um eine hier in Fahrtrichtung auf der rechten Fahrzeugseite angeordnete Klappachse 14 nach oben geschwenkt. In der geschlossenen Position dichtet der Deckel 13 auch die Filterkammer an ihrer Oberseite ab, sodass der Saugluftstrom nur durch die Filtereinheit und von dort durch die entsprechenden Luftführungskanäle zu einem Auslass strömen kann.

Der Materialsammelbehälter 05 ist um eine Kippachse 15 (Fig. 2) schwenkbar, um von der Arbeitsposition (Fig. 2) in die Entleerungsposition (Fig. 1) geschwenkt werden zu können. In der Entleerungsposition weist eine Sammelkammeröffnung 16 nach unten, sodass das aufgesaugte Material selbsttätig austreten kann.

Die Kippachse 15 verläuft in dem dargestellten Fall an der linken unteren Kante des Materialsammelbehälters 05, sodass der Materialsammelbehälter zur linken Fahrzeugseite hin ausgekippt werden kann. Die Seitenwand des Materialsammelbehälters verläuft auf der Seite der Kippachse 15 keilförmig nach unten, sodass im unteren Bereich des Materialsammelbehälters Platz geschaffen ist für die Kippachse, wodurch diese nicht oder allenfalls geringfügig über die maximalen Abmessungen des Materialsammelbehälters hinausragt.

Die Filtereinheit 12 umfasst als ein Filterelement zahlreiche Filterpatronen 17, die in matrixartig einer Halteplatte 18 befestigt sind. Die so gebildete Filtereinheit 12 befindet sich in der Arbeitsposition vollständig in einer Filterkammer 19, die ihrerseits ein Bestandteil des Materialsammelbehälters 05 ist. Die Filtereinheit 12 ist während des Saugbetriebs vom Deckel 13 an ihrer Oberseite verschlossen.

Die Filtereinheit 12 ist mit der Halteplatte 18 an einer Drehachse 21 drehbar befestigt. Die Drehachse 21 verläuft an der rechten oberen Kante des Materialsammelbehälters 05, somit parallel zur Kippachse 15, jedoch radial beabstandet zu dieser. In Bezug auf den Materialsammelbehälter liegt die Drehachse 21 der Kippachse 15 diametral gegenüber. In der Arbeitsposition liegt die Halteplatte 18 in einem Rahmen an der Oberseite der Filterkammer, wobei zu Abdichtung dort ein Dichtgummi oder dergleichen vorgesehen sein kann.

Um die Filtereinheit 12 zu säubern oder zu warten, kann diese aus der Filterkammer 19 heraus geschwenkt werden. Dazu ist zunächst ein Verriegelungselement 22, welches beispielsweise mehrere Schrauben umfasst und die Filtereinheit in der Filterkammer fixiert, zu entriegeln. Wenn nachfolgend der Materialsammelbehälter 05 aus der Arbeitsposition in die Entleerungsposition geschwenkt wird, führt dies bei einer Verkippung von mehr als 90° automatisch dazu, dass das vom Gewicht der Filtereinheit 12 ausgeübte Drehmoment ein Verschwenken der Filtereinheit um die Drehachse 21 bewirkt, sodass die Filtereinheit aus der Filterkammer herausschwenkt. Dieser herausgeschwenkte Zustand der Filtereinheit 12 ist in Fig. 1 erkennbar. Je weiter der Materialsammelbehälter über einen Schwenkwinkel von 90° hinaus verkippt wird, desto weiter schwenkt auch die Filtereinheit schwerkraftbedingt heraus. Alternativ kann ein zusätzlicher Antrieb vorgesehen sein, um das Herausschwenken der Filtereinheit zu unterstützen. Damit die Filterpatronen 17 beim Herausschwenken nicht mit der Wandung der Filterkammer 19 kollidieren, ist ein Freiraum 23 vorgesehen.

### Bezugszeichenliste

- 01: Saugbagger
- 02: Fahrzeuggestell
- 03: Fahrzeugräder
- 04: Fahrzeuglängsachse
- 05: Materialsammelbehälter
- 06: Sauganschluss
- 07: Saugschlauch
- 08: Sauggebläse
- 09: Sammelkammer
- 10: --
- 11: Trennwand
- 12: Filtereinheit
- 13: Deckel
- 14: Klappachse
- 15: Kippachse
- 16: Sammelkammeröffnung
- 17: Filterelement / Filterpatrone
- 18: Halteplatte
- 19: Filterkammer
- 20: --
- 21: Drehachse
- 22: Verriegelungselement
- 23: Freiraum

## Patentansprüche

1. Saugbagger (01) mit:
- einem Fahrzeuggestell (02);
- einem Sauggebläse (08), welches einen Saugstrom erzeugt;
- einem auskippbaren Materialsammelbehälter (05), der eine Sammelkammer (09) aufweist und um eine parallel zur Fahrzeuglängsachse (04) verlaufende Kippachse (15) schwenkbar ist zwischen einer Arbeitsposition und einer Entleerungsposition, in welcher sich eine Sammelkammeröffnung (16) in einer unteren Position befindet, um das in der Sammelkammer (09) enthaltene Material schwerkraftbedingt austreten zu lassen;
- eine an einer parallel zur Kippachse (15) des Materialsammelbehälters (05) verlaufenden Drehachse (21) drehbeweglich gelagerte Filtereinheit (12), welche in einer Filterkammer (19) im Materialsammelbehälter (05) in Saugstromrichtung hinter der Sammelkammer (09) angeordnet ist und mindestens ein Filterelement (17) enthält, das vom Saugstrom durchströmt wird;
**dadurch gekennzeichnet, dass** die Drehachse (21) am Materialsammelbehälter (05) gelagert ist und dass mindestens ein Verriegelungselement (22) vorgesehen ist, welches im verriegelten Zustand die Lage der Filtereinheit (12) in der Filterkammer (19) fixiert und die Drehung um die Drehachse (21) blockiert, während im entriegelten Zustand ein Schwenken der Filtereinheit (12) um die Drehachse (21) ermöglicht ist, um die Filtereinheit (12) zumindest abschnittsweise aus der Filterkammer (19) heraus zu schwenken, und dass der Schwerpunkt der Filtereinheit (12) in Bezug zur Drehachse (21) derart angeordnet ist, dass die Filtereinheit (12) beim Übergang von der Arbeitsposition in die Entleerungsposition und bei entriegeltem Verriegelungselement (22) schwerkraftbedingt selbsttätig zumindest abschnittsweise aus der Filterkammer (19) herausschwenkt.

2. Saugbagger (01) nach Anspruch 1, **dadurch gekennzeichnet, dass** in der Arbeitsposition des Materialsammelbehälters die Drehachse (21) in Bezug auf eine Fahrzeugmittelebene der Kippachse (15) diametral gegenüberliegt.

3. Saugbagger (01) nach Anspruch 1 oder 2, **dadurch gekennzeichnet, dass** die Filtereinheit (12) eine Halteplatte (18) besitzt, an welcher mehrere Filterelemente (17) befestigt sind, und dass die Halteplatte (18) an einer ihrer Seitenkanten an der Drehachse (21) gelagert ist.

4. Saugbagger (01) nach einem der Ansprüche 1 bis 3, **dadurch gekennzeichnet, dass** ein Deckel (13) vorhanden ist, welcher den Materialsammelbehälter (05) in der Arbeitsposition an seiner Oberseite verschließt und schwenkbar an einer Klappachse (14) gelagert ist, um beim Übergang in die Entleerungsposition die Oberseite des Materialsammelbehälters (05) freizugeben.

5. Saugbagger (01) nach Anspruch 4, **dadurch gekennzeichnet, dass** im Deckel (13) Luftkanalabschnitte zur Führung des Saugstroms von der Filtereinheit (12) zum Sauggebläse (08) angeordnet sind.

6. Saugbagger (01) nach einem der Ansprüche 1 bis 5, **dadurch gekennzeichnet, dass** der Materialsammelbehälter (05) um mehr als 90° um die Kippachse (15) verschwenkbar ist, um von der Arbeitsposition in die Entleerungsposition zu gelangen.

7. Saugbagger (01) nach einem der Ansprüche 1 bis 6, **dadurch gekennzeichnet, dass** das Filterelement durch mehrere zylindrische Filterpatronen (17) aus Filtermaterial gebildet ist.

8. Saugbagger (01) nach Anspruch 7, soweit er auf Anspruch 3 rückbezogen ist, **dadurch gekennzeichnet, dass** die Filterpatronen (17) mithilfe von Schnellspannverschlüssen lösbar in der Halteplatte (18) befestigt sind.

9. Saugbagger (01) nach Anspruch 7 oder 8, **dadurch gekennzeichnet, dass** zwischen den Filterpatronen (17), welche von der Drehachse (21) am weitesten entfernt positioniert sind, und der Wandung der Filterkammer (19), welche von der Drehachse am weitesten entfernt liegt, ein Freiraum (23) verbleibt, der das Ausschwenken der Filtereinheit (12) gestattet, ohne Kollision zwischen diesen Filterpatronen und dieser Wandung.

10. Saugbagger nach einem der Ansprüche 1 bis 9, **dadurch gekennzeichnet, dass** ein Schwenkantrieb vorgesehen ist, der bei Aktivierung auf die Filtereinheit einwirkt, um das Ausschwenken aus der Filterkammer zu unterstützen.

## Claims

1. A suction excavator (01) having:
- a vehicle chassis (02);
- a suction fan (08) that generates a suction flow;
- a dumpable material collection container (05) that has a collection chamber (09) and is swivelable about a tilt axis (15) that extends parallel to the vehicle longitudinal axis (04), between a working position and an emptying position, in which a collection chamber opening (16) is in a lower position in order to evacuate by gravity the material contained in the collection chamber (09);
- a filter unit (12) that is rotatably mounted on a rotational axis (21) that extends parallel to the tilt axis (15) of the material collection container (05), and that is situated in a filter chamber (19) in the material collection container (05), behind the collection chamber (09) in the suction flow direction, and contains at least one filter element (17) through which the suction flow passes;
**characterized in that** the rotational axis is supported on the collection container (05) and **in that** at least one locking element (22) is provided, which in the locked state fixes the position of the filter unit (12) in the filter chamber (19) and blocks rotation about the rotational axis (21), while in the unlocked state, swiveling of the filter unit (12) about the rotational axis (21) is enabled in order to swivel the filter unit (12) out of the filter chamber (19), at least in sections, and **in that** the center of gravity of the filter unit (12) is situated in relation to the rotational axis (21) in such a way that the filter unit (12), at least in sections, automatically swivels out of the filter chamber (19) by gravity during the transition from the working position into the emptying position, and with the locking element (22) unlocked.

2. The suction excavator (01) according to Claim 1, **characterized in that** the rotational axis (21) is diametrically opposite from the tilt axis (15) in relation to a vehicle center plane in the working position of the collection container.

3. The suction excavator (01) according to Claim 1 or 2, **characterized in that** the filter unit (12) has a retaining plate (18) to which multiple filter elements (17) are fastened, and the retaining plate (18) on one of its side edges is supported on the rotational axis (21).

4. The suction excavator (01) according to one of Claims 1 to 3, **characterized in that** a cover (13) is present which closes the material collection container (05) on its top side in the working position, and is supported so as to be swivelable on a folding axis (14) in order to release the top side of the material collection container (05) during the transition into the emptying position.

5. The suction excavator (01) according to Claim 4, **characterized in that** air duct sections for conducting the suction flow from the filter unit (12) to the suction fan (08) are situated in the cover (13).

6. The suction excavator (01) according to one of Claims 1 to 5, **characterized in that** the material collection container (05) is swivelable by more than 90° about the tilt axis (15) in order to reach the emptying position from the working position.

7. The suction excavator (01) according to one of Claims 1 to 6, **characterized in that** the filter element is formed by multiple cylindrical filter cartridges (17) made of filter material.

8. The suction excavator (01) according to Claim 7, to the extent referenced back to Claim 3, **characterized in that** the filter cartridges (17) are detachably fastened in the retaining plate (18) by means of quick-acting closures.

9. The suction excavator (01) according to Claim 7 or 8, **characterized in that** a clearance (23) remains between the filter cartridges (17), which are positioned the farthest distance from the rotational axis (21), and the wall of the filter chamber (19), which is situated the farthest distance from the rotational axis, and the clearance allows the filter unit (12) to swivel out without a collision between these filter cartridges and this wall.

10. The suction excavator according to one of Claims 1 to 9, **characterized in that** a slew drive is provided, which upon activation additionally acts on the filter unit in order to assist with the swiveling out from the filter chamber.

## Revendications

1. Excavatrice-aspiratrice (01) comprenant :
- un châssis de véhicule (02) ;
- une soufflante-aspirante (08) qui produit un courant d'aspiration ;
- un récipient collecteur (05) pouvant basculer qui présente une chambre collectrice (09) et qui peut basculer sur un axe de bascule (15) parallèle à l'axe longitudinal du véhicule (04) entre une position de travail et une position de vidage dans laquelle une ouverture de chambre collectrice (16) se trouve dans une position basse pour faire sortir le matériau contenu dans la chambre collectrice (09) par gravité ;
- une unité filtrante (12) disposée mobile en rotation sur un pivot (21) parallèle à l'axe de bascule (15) du récipient collecteur de matériau (05), qui est disposée derrière la chambre collectrice (09) dans une chambre filtrante (19) dans le récipient collecteur de matériau (05) dans le sens d'aspiration et contient au moins un élément filtrant (17) qui est traversé par le courant d'aspiration ;
**caractérisée en ce que** le pivot (21) est disposé sur le récipient collecteur de matériau (05) et qu'au moins un élément de verrouillage (22) est prévu qui, dans l'état verrouillé, fixe la position de l'unité filtrante (12) dans la chambre filtrante (19) et bloque la rotation sur le pivot (21), tandis que dans l'état déverrouillé, une bascule de l'unité filtrante (12) sur le pivot (21) est possible, pour faire basculer et sortir l'unité filtrante (12) hors de la chambre filtrante (19) au moins par tronçons, et que le centre de gravité de l'unité filtrante (12) par rapport au pivot (21) est disposé de telle sorte que l'unité filtrante (12) bascule automatiquement par gravité hors de la chambre filtrante (19), au moins par tronçons, lors du passage de la position de travail à la position de vidage et lorsque l'élément de verrouillage (22) est déverrouillé.

2. Excavatrice-aspiratrice (01) selon la revendication 1, **caractérisée en ce que** dans la position de travail du récipient collecteur de matériau, le pivot (21) est opposé diamétralement à l'axe de bascule (15) par rapport à un plan médian du véhicule.

3. Excavatrice-aspiratrice (01) selon la revendication 1 ou 2, **caractérisée en ce que** l'unité filtrante (12) possède une plaque de fixation (18) sur laquelle une pluralité d'éléments filtrant (17) sont fixés, et que la plaque de fixation (18) est disposée contre le pivot (21) par une de ses arêtes latérales.

4. Excavatrice-aspiratrice (01) selon l'une des revendications 1 à 3, **caractérisée en ce qu'**un couvercle (13) est présent, lequel referme le récipient collecteur de matériau (05) dans la position de travail sur sa face supérieure et est disposé pivotant sur un axe de rabattement (14) pour libérer la face supérieure du récipient collecteur de matériau (05) lors du passage à la position de vidage.

5. Excavatrice-aspiratrice (01) selon la revendication 4, **caractérisée en ce que** des tronçons de canaux d'air sont disposés dans le couvercle (13) pour guider le courant d'aspiration de l'unité filtrante (12) à la soufflante-aspirante (08).

6. Excavatrice-aspiratrice (01) selon l'une des revendications 1 à 5, **caractérisée en ce que** le récipient collecteur de matériau (05) peut basculer de plus de 90° sur l'axe de bascule (15) pour parvenir de la position de travail à la position de vidage.

7. Excavatrice-aspiratrice (01) selon l'une des revendications 1 à 6, **caractérisée en ce que** l'élément filtrant est formé par plusieurs cartouches filtrantes (17) cylindriques en matériau filtrant.

8. Excavatrice-aspiratrice (01) selon la revendication 7, dans la mesure où il est renvoyé à la revendication 3, **caractérisée en ce que** les cartouches filtrantes (17) sont fixées de manière séparable dans la plaque de fixation (18) à l'aide de raccords rapides.

9. Excavatrice-aspiratrice (01) selon la revendication 7 ou 8, **caractérisée en ce qu'**entre les cartouches filtrantes (17) qui sont positionnées éloignées le plus loin du pivot (21), et la paroi de la chambre filtrante (19) qui est positionnée éloignée le plus loin du pivot, il reste un espace libre (23) qui permet la bascule de l'unité filtrante (12) sans collision entre ces cartouches filtrantes et cette paroi.

10. Excavatrice-aspiratrice selon l'une des revendications 1 à 9, **caractérisée en ce qu'**un entraînement de bascule est prévu qui agit sur l'unité filtrante lorsqu'il est activé, pour aider à la bascule hors de la chambre filtrante.
